# EUROPÄISCHE PATENTANMELDUNG

(11) **EP 4 691 323 A1**
(43) Veröffentlichungstag der Anmeldung: **11.02.2026**
(21) Anmeldenummer: 25190460.3
(22) Anmeldetag: 18.07.2025
(51) Int. Cl.: A47J 31/42, A47J 42/08, A47J 42/18

(54) **HEISSGETRÄNKEGERÄT MIT EINER MAHLGRADVERSTELLEINRICHTUNG, VERFAHREN ZUM BETREIBEN DES HEISSGETRÄNKEGERÄTS, VERWENDUNG DER MAHLGRADVERSTELLEINRICHTUNG UND COMPUTERPROGRAMMPRODUKT**

(30) Priorität: 09.08.2024 DE 102024207634
(71) Anmelder: BSH Hausgeräte GmbH, 81739 München (DE)
(72) Erfinder: Losbichler, Matthias, 84574 Taufkirchen (DE); Reichel, Thomas, 83278 Traunstein (DE)

(57) **Zusammenfassung**

Eine Heißgetränkezubereitungseinrichtung zur Durchführung unterschiedlicher Zubereitungsvorgänge mit zumindest einem Mahlwerk (1) für Mahlgut, mit einer Vorrichtung (2) zum Verstellen des Mahlgrads des zumindest einen Mahlwerks ("Mahlgradverstelleinrichtung "), mit einer Steuerungseinrichtung (4) zur Steuerung der Zubereitungsvorgänge wird weitergebildet durch eine elektrisch ansteuerbare Ausbildung der Mahlgradverstelleinrichtung (2) und durch eine Ausbildung und Einrichtung der Steuereinheit (4) und der Mahlgradverstelleinrichtung (2) dazu, die Mahlgradverstelleinrichtung (2) jedenfalls auch während eines Mahlvorgangs zu betreiben. Die Erfindung betrifft außerdem ein Verfahren zum Betreiben einer derartigen Heißgetränkezubereitungsvorrichtung, die Verwendung der Mahlgradverstelleinrichtung der Heißgetränkezubereitungsvorrichtung zum Verstellen des Mahlwerks und ein Computerprogrammprodukt zur Durchführung des Verfahrens.

## Beschreibung

Die Erfindung betrifft eine Heißgetränkezubereitungsvorrichtung, insbesondere einen Kaffeevollautomaten, zur Durchführung unterschiedlicher Zubereitungsvorgänge, mit zumindest einem Mahlwerk für Mahlgut, mit einer Vorrichtung zum Verstellen des Mahlgrads des zumindest einen Mahlwerks und mit einer Steuerungseinrichtung zur Steuerung der Zubereitungsvorgänge. Die Erfindung betrifft außerdem ein Verfahren zum Betreiben einer derartigen Heißgetränkezubereitungsvorrichtung, die Verwendung der Mahlgradverstelleinrichtung der Heißgetränkezubereitungsvorrichtung zum Verstellen des Mahlwerks und ein Computerprogrammprodukt zur Durchführung des Verfahrens.

Die WO 2022 / 253 696 A1 beschreibt ein Verfahren zum Mahlen von Mahlgut mit zumindest einem Mahlwerk, das ein Betätigen des Mahlwerks in eine erste Richtung zum Mahlen des Mahlguts und das Betätigen des Mahlwerks in eine von der ersten Richtung verschiedene zweite Richtung umfasst, wobei das Betätigen des Mahlwerks in die zweite Richtung nach Abschluss des Mahlens des Mahlguts in Reaktion auf eine Nutzereingabe und/oder automatisch in Reaktion auf eine Anzahl von Betätigungen des Mahlwerks in die erste Richtung erfolgt.

Das Betätigen des Mahlwerks in die zweite Richtung kann eine Rotation oder Translation eines ersten Mahlwerkselements relativ zu einem zweiten Mahlwerkselement sein und dient dazu, einen Mahlwerksspalt zwischen den zwei Mahlwerkselementen zu vergrößern. Dadurch kann ein in dem Mahlspalt befindliches Mahlgut, gemahlenes Mahlgut oder ein Mahlgut-Pulvergemisch aus dem Mahlspalt befördert werden, das anderenfalls eine nachfolgende Betätigung des Mahlwerks beeinträchtigen, insbesondere zu einer sog. Aufbauschneide führen könnte. Die Betätigung des Mahlwerks in die zweite Richtung erfordert lediglich eine verhältnismäßig einfache Getriebestufe, weil sie bzw. die Betätigung des Mahlwerks in die zweite Richtung keiner hohen Genauigkeit unterworfen ist.

Aufgabe der Erfindung ist es, den Aufbau und den Betrieb einer Heißgetränkezubereitungsvorrichtung weiter zu vereinfachen.

Diese Aufgabe wird bei der eingangs genannten Heißgetränkezubereitungsvorrichtung dadurch gelöst, dass sie über eine elektrisch ansteuerbare Ausbildung der Mahlgradverstelleinrichtung verfügt und über eine Ausbildung und Einrichtung der Steuereinheit und der Mahlgradverstelleinrichtung dazu, die Mahlgradverstelleinrichtung jedenfalls auch während eines Mahlvorgangs zu betreiben.

Die Heißgetränkezubereitungsvorrichtung, im Folgenden vereinfacht Heißgetränkegerät, bereitet aus selbst gemahlenem Mahlgut ein benutzerseitig ausgewähltes pulverbasiertes Heißgetränk, beispielsweise einen Espresso oder einen Latte Macchiato zu. Es kann vorzugsweise für den Hausgebrauch ausgelegt sein.

Das Heißgetränkegerät kann insbesondere ein Kaffeevollautomat sein, sein Mahlwerk kann als Mahlgut insbesondere Kaffeebohnen verarbeiten. Der Mahlgrad des Mahlwerks bestimmt sich über einen Mahlspalt, der zwischen zwei Mahlwerkzeugen des Mahlwerks besteht. Mahlwerkzeuge können beispielsweise ein Mahlkegel und ein Mahlring oder zwei einander zugeordnete Mahlscheiben sein, die an ihren einander zugewandten Flächen jeweils Schneidkanten aufweisen, zwischen denen der Mahlspalt gebildet wird. Je nach dem relativen Abstand der Schneidkanten voneinander ist der Mahlspalt größer oder kleiner. Die Größe des Mahlspalts bzw. der Abstand der Mahlwerkzeuge voneinander bestimmt den Mahlgrad, mit dem das Mahlgut grober oder feiner gemahlen wird.

Die erfindungsgemäße Mahlgradverstelleinrichtung dient der Verstellung des Mahlspalts zwischen den Mahlwerkzeugen und damit der Verstellung des Mahlgrads. Sie lässt sich bei Stillstand des Mahlwerks, also insbesondere vor oder nach einem Mahlvorgang betreiben, beispielsweise um den Mahlgrad für einen nachfolgenden Zubereitungsvorgang zu verstellen. Die Verstellung der Mahlgradverstelleinrichtung kann dazu grundsätzlich in beide Richtungen erfolgen, also entweder in eine Richtung auf einen groberen Mahlgrad hin oder in eine Richtung auf einen feineren Mahlgrad hin.

Erfindungsgemäß lässt sich die Mahlgradverstelleinrichtung in die beiden Richtungen auch während des Betriebs des Mahlwerks betreiben, insbesondere auch während eines Mahlvorgangs. Grundsätzlich kann der Betrieb des Mahlwerks auch einen Leerlauf umfassen, also eine Drehung der Mahlwerkskomponenten, ohne Mahlgut zu zerkleinern. Die erfindungsgemäße Mahlgradverstelleinrichtung ist aber auch dafür ausgelegt, sogar während eines Mahlvorgangs, also während eines Zerkleinerns von Mahlgut, betrieben zu werden. Das Aktivieren der Mahlgradeinstelleinrichtung bei aktiviertem Mahlwerk dient einem maschinenschonenden Betrieb des Heißgetränkegeräts, weil die dafür aufzuwendenden Verstellkräfte geringer sind als bei Stillstand des Mahlwerks. Dies trifft insbesondere auf Mahlwerke zu, in denen im stillstehenden Mahlwerk noch Bohnenreste vorhanden sind.

Die Mahlgradverstelleinrichtung kann dazu insbesondere gemäß der DE 10 2019 204 620 A1 des Anmelders ausgestaltet sein, womit sie in der Lage ist, sehr hohe Kräfte bzw. Drehmomente zu übertragen. Dadurch ist sie dafür ausgestattet, in jedem Betriebszustand des Mahlwerks aktiviert werden zu können.

Das Heißgetränkegerät kann außerdem über eine Einrichtung zum Entspannen des Mahlwerks verfügen. Denn insbesondere, wenn die Komponenten des Mahlwerks aus Kunststoff hergestellt sind und wenn sie auch im Ruhezustand des Mahlwerks belastet werden bzw. bleiben, können sie durch Kriechen des (Kunststoff-)Materials ihre ursprüngliche Form verlieren. Ihre mit der Zeit schwindende Maßhaltigkeit kann sich negativ auf die Lebensdauer und die Genauigkeit des Mahlwerks auswirken. Dem beugt das erfindungsgemäß ausgestattete Heißgetränkegerät vor, indem es die Einrichtung zum Entspannen des Mahlwerks aktiviert und so für einen belastungsfreien Ruhezustand des Mahlwerks sorgt. Während also die Mahlgradverstelleinrichtung für einen insbesondere mahlwerksschonenden Betrieb sorgt, führt die Einrichtung zum Entspannen des Mahlwerks zu einer weiteren Entlastung des Heißgetränkegeräts im Ruhezustand. Gemeinsam dienen sie damit einem sehr nachhaltigen Betrieb des Heißgetränkegeräts.

Nach einer vorteilhaften Ausgestaltungsform des erfindungsgemäßen Heißgetränkegeräts können die Steuereinheit und die Mahlgradverstelleinrichtung dazu ausgebildet und eingerichtet sein, die Mahlgradverstelleinrichtung in eine Richtung auf einen gröberen Mahlgrad hin zu verstellen. Die Steuereinheit und die Mahlgradverstelleinrichtung können dazu miteinander signaltechnisch gekoppelt sein, so dass die Steuereinheit einen Steuerbefehl zur Aktivierung an die Mahlgradverstelleinrichtung absetzen kann, woraufhin jene in Betrieb gesetzt wird. Die Steuereinheit kann zudem derart ausgebildet sein, dass sie die Verstellung der Mahlgradverstelleinrichtung insbesondere unabhängig von einer Benutzereingabe initiiert. Außerdem kann sie dazu ausgebildet sein, die Verstellung der Mahlgradverstelleinrichtung auch verschmutzungsunabhängig und unabhängig von einem Zubereitungsvorgang zu veranlassen.

Damit kann das Heißgetränkegerät dafür ausgestattet sein, das Mahlwerk selbsttätig zu entspannen bzw. zu relaxieren. Weil die Steuereinheit dafür die Mahlgradverstelleinrichtung aktiviert, erfordert das Heißgetränkegerät dafür keine separate Vorrichtung. Damit verringern sich der konstruktive Aufwand und die Herstellungskosten des Heißgetränkegeräts.

Das Heißgetränkegerät kann das Mahlwerk benutzer-, zubereitungs- und/oder verschmutzungsunabhängig auffahren bzw. eine gewisse Anzahl an Stufen gröber einstellen. Dadurch entspannt die Mahlgradverstelleinrichtung das Mahlwerk und baut Kräfte auf seine Komponenten ab. Als Zeitpunkt dafür eignet sich der Abschluss eines Zubereitungsvorgangs, insbesondere nach einem Mahlvorgang. Das Entspannen kommt der Lebensdauer und der Genauigkeit des Mahlwerks zugute und dient damit einem nachhaltigen Betrieb des Heißgetränkegeräts.

Nach einer weiteren vorteilhaften Ausgestaltungsform des erfindungsgemäßen Heißgetränkegeräts kann es eine Speichereinheit umfassen, die dazu geeignet und ausgebildet ist, die Einstellung der Mahlgradverstelleinrichtung vor der Verstellung in eine Richtung auf einen gröberen Mahlgrad hin zu erfassen und abrufbar zu speichern. Die Speichereinheit kann dazu mit der Steuerungseinrichtung signaltechnisch gekoppelt oder integral mit ihr ausgebildet sein. Die Steuerungseinrichtung kann dann die aktuelle Einstellung der Mahlgradverstelleinrichtung vor der selbsttätigen Verstellung zum Zweck des Entspannens erfassen und in der Speichereinheit ablegen. Zu einem späteren Zeitpunkt, beispielsweise nach einer erneuten Aktivierung des Heißgetränkegerätes, kann die Steuerungseinrichtung die ursprüngliche Einstellung der Mahlgradverstelleinrichtung abrufen und wiederherstellen. Damit kann die Steuerungseinrichtung den Betriebszustand des Heißgetränkegeräts zum Zeitpunkt vor der Entspannung des Mahlwerks wiederherstellen, ohne dass ein Benutzer davon unmittelbar Kenntnis erhält. Er findet das Heißgetränkegerät quasi unverändert vor, beispielsweise um einen früheren Zubereitungsvorgang ohne Verstellen von Zubereitungsparametern wiederholen zu können. Die Speichereinheit kann damit der Schnelligkeit des Betriebs des Heißgetränkegeräts dienen. Alternativ kann die Speichereinheit die Lebensdauer des Heißgetränkegeräts verbessern, indem sie dazu dient, einen Mahlgrad erst möglichst spät einstellen und so einen belastungsarmen Zustand des Mahlwerks möglichst lange aufrechterhalten zu können.

Die eingangs genannte Aufgabe wird außerdem mit einem Verfahren zum Betreiben eines Heißgetränkezubereitungsgeräts, das in der oben beschriebenen Weise ausgestattet ist, mit den folgenden Schritten gelöst:
a) Aktivieren eines Zubereitungsvorgangs,
b) Durchführen eines Mahlvorgangs,
c) Aktivieren der Mahlgradverstelleinrichtung zumindest auch während des Mahlvorgangs, um den Mahlgrad in eine Richtung auf einen gröberen Mahlgrad oder in eine Richtung auf einen feineren Mahlgrad hin zu verstellen.

Der erste Schritt a), das Aktivieren des Zubereitungsvorgangs, kann mit dem Einschalten des Geräts oder mit einem "Aufwecken" des Geräts aus einem Bereitschaftszustand zusammenfallen. Alternativ und im einfachsten Fall handelt es sich um die Wahl eines neuen Getränks während des laufenden Betriebs des Geräts.

An das Aktivieren des Zubereitungsvorgangs schließt sich - u. U. nach gewissen Zwischenschritten, wie beispielsweise einer geräteseitigen Abfrage von Zubereitungsparametern - in Schritt b) der Mahlvorgang in an sich bekannter Weise an, um das aktuell gewünschte Getränk brühen zu können.

Erfindungsgemäß kann der Schritt c), das Aktivieren der Mahlgradverstelleinrichtung, schon während des Mahlvorgangs des Schritts b) oder erst danach erfolgen. Zur Unterscheidung von anderen Aktivierungen der Mahlgradverstelleinrichtung wird diejenige im Schritt c) im Folgenden als "erste Aktivierung" bezeichnet.

Ein erster besonderer Aspekt des erfindungsgemäßen Verfahrens und insbesondere der ersten Aktivierung beruht darauf, dass die erste Aktivierung der Mahlgradverstelleinrichtung schon während des Mahlvorgangs, also im laufenden Betrieb des Mahlwerks erfolgen kann. Möglich wird die erfindungsgemäße Gleichzeitigkeit der Mahlgradverstellung einerseits und des Mahlbetriebs andererseits durch die besondere Ausstattung des Heißgetränkegeräts mit der Mahlgradverstelleinrichtung gemäß der DE 10 2019 204 620 A1. Ihr Spindeltrieb vermag nämlich sehr hohe Kräfte bzw. Drehmomente zu übertragen. Dadurch lässt sich der Mahlgrad des Mahlwerks mittels der Mahlgradverstelleinrichtung schon während des Betriebs des Mahlwerks verstellen.

Die alternative Verstellung des Mahlgrads nach Abschluss des Mahlvorgangs stellt insofern einen zweiten besonderen Aspekt des erfindungsgemäßen Verfahrens dar, als sich die Mahlgradverstelleinrichtung selbst im Stillstand des Mahlwerks aktivieren lässt. Auch diesen erfindungsgemäßen Aspekt ermöglicht die besondere Ausstattung der Mahlgradverstelleinrichtung mit einem drehmomentenstarken Spindeltrieb.

Ein dritter besonderer Aspekt der Erfindung betrifft beide obigen Zeitpunkte der ersten Aktivierung der Mahlgradverstelleinrichtung in Schritt c) gleichermaßen: Die erste Aktivierung der Mahlgradverstelleinrichtung erfolgt erfindungsgemäß maschinenseitig sowohl benutzer- als auch zubereitungs- als auch verschmutzungsunabhängig. Die erste Aktivierung geht also nicht, auch nicht mittelbar, auf eine Benutzereingabe zurück, zum Beispiel, um ein Mahlergebnis zu beeinflussen. Sie dient auch nicht der Erfüllung eines aktuellen Zubereitungswunsches bzw. der Durchführung eines aktuellen Zubereitungsvorgangs, auch nicht im Sinne einer maschinenseitigen Korrektur eines Einstellparameters, nämlich des Mahlgrads. Und schließlich wird sie maschinenseitig oder benutzerseitig auch nicht hervorgerufen, um eine Verschmutzungsproblematik zu beseitigen, beispielsweise, weil sich Bohnenreste zwischen den Mahlelementen befinden oder verklemmt haben könnten. Die erste Aktivierung erfolgt vielmehr unabhängig von diesen Aspekten und entsprechend einer werkseitigen Vorgabe automatisch.

Grundsätzlich lässt sich der Mahlgrad bei der ersten Aktivierung in Schritt c) in eine Richtung auf einen gröberen Mahlgrad oder in eine Richtung auf einen feineren Mahlgrad hin verstellen. Nach einer vorteilhaften Ausgestaltung des erfindungsgemäßen Verfahrens kann die erste Aktivierung der Mahlgradverstelleinrichtung im Schritt c) in eine Richtung auf einen gröberen Mahlgrad hin erfolgen. Zwar kann im Zuge der ersten Aktivierung das Mahlwerk auch von steckengebliebenen oder verklemmten Bodenresten befreit werden. Ihr Hauptzweck besteht aber darin, das Mahlwerk zu entspannen bzw. zu relaxieren.

Denn häufig sind Komponenten des Mahlwerks aus Kunststoff gefertigt. Werden bzw. bleiben sie auch im Ruhezustand des Mahlwerks verspannt, können sie auf Dauer infolge Kriechens ihre ursprüngliche Form verlassen, was sich negativ auf die Lebensdauer und die Genauigkeit des Mahlwerks auswirken kann. Mit der benutzer-, zubereitungs- und verschmutzungsunabhängigen ersten Aktivierung der Mahlgradverstelleinrichtung in Schritt c) kann das Mahlwerk aufgefahren bzw. eine gewisse Anzahl an Stufen gröber gefahren werden, um es zu entspannen und um Kräfte auf seine Komponenten abzubauen. Die erste Aktivierung der Mahlgradverstelleinrichtung stellt zwar einen zusätzlichen Verfahrensschritt dar. Er erfolgt aber automatisch und damit ohne zusätzlichen Aufwand für den Benutzer, kommt dafür aber der Lebensdauer und der Genauigkeit des Mahlwerks zugute und dient damit einem nachhaltigen Betriebsverfahren des Heißgetränkezubereitungsgeräts.

Dafür lassen sich grundsätzlich fast beliebige Zeitpunkte wählen. Nach einer vorteilhaften Ausgestaltung des obigen Verfahrens kann die erste Aktivierung der Mahlgradverstelleinrichtung im Schritt c) beispielsweise nach jedem Mahlvorgang erfolgen. Damit ist sichergestellt, dass das Mahlwerk weitgehend belastungsfrei ist, sobald das Heißgetränkezubereitungsgerät ausgeschaltet oder in einem Ruhezustand ist oder zumindest keinen Zubereitungsvorgang mehr durchführt. Alternativ dazu kann die erste Aktivierung in Abhängigkeit von einem Zeitintervall oder von einer Anzahl von Betätigungen des Mahlwerks bzw. in Abhängigkeit von einer Anzahl von Mahlvorgängen vorgenommen werden. Das Erfassen eines Zeitintervalls oder einer Anzahl von Mahlvorgängen kann dazu dienen, eine Belastung des Mahlwerks durch Benutzung zu erfassen und die erste Aktivierung der Mahlgradverstelleinrichtung daran zu orientieren.

Das erfasste Zeitintervall kann aber auch einen Zeitraum einer Nichtbenutzung des Heißgetränkegeräts betreffen. Damit lässt sich ein eventuell unnötiges Entspannen des Mahlwerks vermeiden, zum Beispiel, weil im Anschluss daran sofort eine weitere Zubereitung angefordert wird.

Eine weitere Möglichkeit dafür kann darin bestehen, die erste Aktivierung in Schritt c) jedenfalls auch vor einem Trennen des Heißgetränkegeräts vom elektrischen Stromnetz vorzunehmen. Bevor also die Stromzufuhr - zum Beispiel infolge eines entsprechenden Tastendrucks eines Benutzers - unterbrochen wird, kann noch die erste Aktivierung des Mahlwerks erfolgen. Damit ist zum einen eine Verzögerung eines anderen, insbesondere eines Zubereitungsvorgangs infolge der ersten Aktivierung ausgeschlossen. Zum andern ist sichergestellt, dass das Mahlwerk bei ausgeschaltem Heißgetränkegerät entspannt ist. Alternativ kann anstelle des Trennens des Heißgetränkegerätes vom elektrischen Stromnetz auch ein stromarmer oder stromfreier Stand-by- Zustand des Heißgetränkegerätes stehen.

Die erste Aktivierung der Mahlgradverstelleinrichtung kann, wie oben erläutert, belastungsabhängig erfolgen. Die Belastung des Mahlwerks kann sich durch ein Zeitintervall für den Betrieb des Heißgetränkegeräts oder durch eine Anzahl von Betätigungen des Mahlwerks erfassen lassen. Nach einer vorteilhaften Ausgestaltung des obigen Verfahrens kann nach dem Schritt b) in einem anschließenden Schritt bi) die Anzahl der Mahlvorgänge und/oder ein Zeitintervall für die Betriebsdauer des Heißgetränkegeräts erfasst werden. Anschließend kann der erfasste Wert mit einem z. B. werkseitig vorgegebenen und geräteseitig hinterlegten Schwellwert verglichen werden. Der Schwellwert gibt eine Belastung des Heißgetränkegeräts an, nach der eine Entspannung des Mahlwerks erfolgen sollte. Bei Erreichen oder Überschreiten des vorgegebenen Schwellwerts kann in einem nachfolgenden Schritt bii) der aktuelle Mahlgrad im Heißgetränkegerät gespeichert werden, bevor im daran anschließenden Schritt c) der Mahlgrad verstellt wird, um die Entspannung des Mahlwerks vorzunehmen. Auf den in Schritt bii) gespeicherten Mahlgrad kann später zurückgegriffen werden, sobald das Heißgetränkegerät wieder in Betrieb genommen wird, sei es nach einem vorübergehenden Ruhezustand oder nach einem vollständigen Ausschalten.

Nach einer vorteilhaften Ausgestaltung des obigen Verfahrens kann daher nach dem Schritt a) in einem Schritt ai) die Mahlgradverstellung ein weiteres Mal aktiviert werden, im Folgenden als "zweite Aktivierung" bezeichnet. Die zweite Aktivierung kann dazu dienen, entweder einen neuen Mahlgrad aus einem neuen Zubereitungsvorgang aus dem Schritt a) einzustellen, nämlich wenn ein Benutzer für einen neuen Zubereitungsvorgang nach einem Ruhezustand des Heißgetränkegeräts oder nach dessen vollständigem Ausschalten einen individuellen neuen Mahlgrad einstellt. Alternativ kann die zweite Aktivierung dazu dienen, den Mahlgrad des letzten vorangegangenen Mahlvorgangs eines vorangegangenen Zubereitungsvorgangs einzustellen. Dazu kann das Heißgetränkegerät auf den gespeicherten Wert für den letzten Mahlgrad zurückgreifen, also auf das Ergebnis aus Schritt bii). Er steht stellvertretend für die Einstellung des Mahlwerks und insbesondere des Mahlgrads, die vor der ersten Aktivierung der Mahlgradverstelleinrichtung bestand, also bevor das Mahlwerk im Schritt c) entspannt wurde.

Weil sowohl die erste Aktivierung als auch die zweite Aktivierung geräteseitig erfolgen, also ohne jegliches Zutun des Benutzers, braucht er keine zusätzlichen Einstellungen vorzunehmen. Durch den selbsttätigen bzw. automatischen Ablauf der obigen Verfahrensschritte bleibt der Benutzer davon vollkommen unbehelligt und findet das Heißgetränkegerät mit vermeintlich unveränderten Einstellungen vor, kann also ggf. mit den zuletzt gewählten Parametern eine weitere Zubereitung anfordern.

Die eingangs genannte Aufgabe wird bei dem oben genannten Heißgetränkegerät außerdem durch eine Verwendung der Mahlgradverstelleinrichtung zum Verstellen des Mahlwerks jedenfalls auch während eines Mahlvorgangs des Mahlwerks gelöst. Das Verstellen des Mahlwerks kann dabei grundsätzlich in beiden Richtungen erfolgen, also entweder in eine Richtung auf einen gröberen Mahlgrad hin oder in eine Richtung auf einen feineren Mahlgrad hin. Das Verstellen des Mahlwerks kann zudem auch während des Stillstands des Mahlwerks vorgenommen werden, also zu nahezu jedem beliebigen Zeitpunkt während des Betriebs des Heißgetränkegeräts, vor allem unmittelbar vor oder unmittelbar nach einem Zubereitungs- bzw. Mahlvorgang. Damit können sämtliche Verstellungen des Mahlwerks, sei es zur Einstellung des Mahlgrads oder für andere Zwecke, durch Verwendung der Mahlgradverstelleinrichtung vorgenommen werden. Zusätzliche Vorrichtungen, insbesondere solche, die für eine Grobverstellung des Mahlwerks erforderlich wären, können damit entfallen. Damit verringern sich der Konstruktionsaufwand und damit die Herstellungskosten des Heißgetränkegeräts.

Nach einer vorteilhaften Ausgestaltungsform des erfindungsgemäßen Heißgetränkegeräts kann die Mahlgradverstelleinrichtung zum selbsttätigen Verstellen des Mahlwerks verwendet werden. Das selbsttätige Verstellen des Mahlwerks bedeutet insbesondere eine benutzerunabhängige Verstellung, also eine solche, die nicht auf eine Benutzeranforderung bzw. auf eine Benutzereingabe am Heißgetränkegerät zurückgeht. Das Verstellen des Mahlwerks kann damit benutzerseitig nicht unterbunden werden. Das selbsttätige Verstellen des Mahlwerks kann darüber hinaus zubereitungs- und verschmutzungsunabhängig erfolgen. Die Verstellung kann beispielsweise unmittelbar nach einem Mahlvorgang erfolgen. Sie kann grundsätzlich in beide Richtungen, vorzugsweise aber in eine Richtung auf einen gröberen Mahlgrad hin geschehen. Damit kann sichergestellt werden, dass das oben erläuterte Entspannen des Mahlwerks zuverlässig erfolgt.

Nach einer weiteren vorteilhaften Ausgestaltungsform des erfindungsgemäßen Heißgetränkegeräts kann es mit einer Steuerungseinrichtung zur Steuerung der Zubereitungsvorgänge ausgestattet sein, wobei die Steuerungseinrichtung zum selbsttätigen Verstellen der Mahlgradverstelleinrichtung verwendet wird. Der Einsatz der Steuerungseinrichtung erlaubt die Berücksichtigung ausgewählter Geräte- oder Betriebsparameter, bevor die Verstellung des Mahlwerks erfolgt. So kann die Verstellung beispielsweise nach einer bestimmten Anzahl von Zubereitungsvorgängen angestrebt werden, es können Pausenzeiten mit der Nutzung erfasst und berücksichtigt werden oder grundsätzlich nur das vollständige Abschalten des Heißgetränkegeräts.

Die eingangs genannte Aufgabe wird schließlich mit dem oben genannten Computerprogrammprodukt gelöst, das direkt in den internen Speicher eines digitalen Computers einer Heißgetränkezubereitungseinrichtung geladen werden kann und Softwarecodeabschnitte umfasst, mit denen die Verfahrensschritte gemäß der obigen Ansprüchen 4 bis 8 des erfindungsgemäßen Verfahrens ausgeführt werden, wenn das Produkt auf dem Computer läuft. Der digitale Computer, in dessen internen Speicher das Computerprogrammprodukt geladen werden kann, ist Bestandteil eines Heißgetränkegeräts, beispielsweise seiner Steuerungseinrichtung.

Das Prinzip der Erfindung wird im Folgenden anhand einer Zeichnung beispielshalber noch näher erläutert. In der Zeichnung zeigen:
- Figur 1:: eine schematisierte Prinzipdarstellung relevanter Komponenten eines Kaffeevollautomaten,
- Figur 2:: ein Ablaufdiagramm des erfindungsgemäßen Verfahrens.

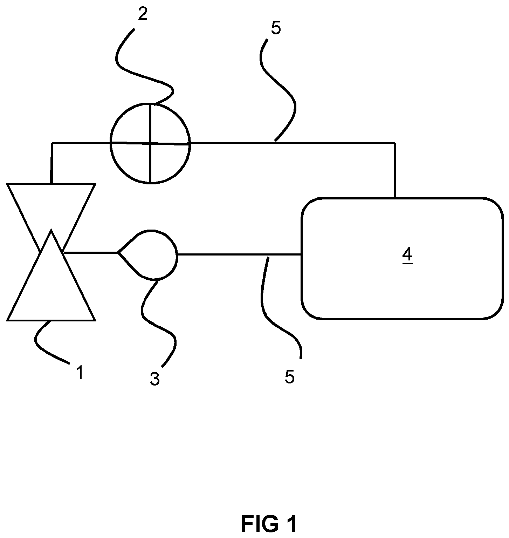

Die Prinzipdarstellung der Figur 1 zeigt als Komponenten eines beispielhaften Kaffeevollautomaten dessen Mahlwerk 1 und eine Mahlgradverstelleinrichtung 2, die mit dem Mahlwerk 1 unmittelbar mechanisch gekoppelt ist. Außerdem ist ein Datenaufnehmer 3 an das Mahlwerk 1 angeschlossen. Sowohl die Mahlgradverstelleinrichtung 2 als auch der Datenaufnehmer 3 sind über elektrische Leitungen 5 mit einer Steuerungseinrichtung 4 gekoppelt.

Die Mahlgradverstelleinrichtung 2 kann mithilfe eines eigenen elektrischen Antriebs einen Mahlspalt zwischen Mahlwerkskomponenten des Mahlwerks 1 verändern. Dazu steuert die Steuereinrichtung 4 die Bestromung des elektrischen Antriebs der Mahlgradverstelleinrichtung 2 entsprechend an.

Der Datenaufnehmer 3 erfasst Betriebsdaten oder Zustandsdaten des Mahlwerks 1. Er kann mechanisch ausgebildet sein, beispielsweise als Zählwerk für Umdrehungszahlen, Betätigungen oder abgeschlossene Malvorgänge des Mahlwerks 1. Alternativ kann er als elektrischer Sensor ausgebildet sein, um geeignete Zustands- oder Betriebsdaten des Mahlwerks 1 zu erfassen. Jedenfalls leitet er die durch ihn erfassten Daten des Mahlwerks 1 über die Leitung 5 an die Steuerungseinrichtung 4 weiter. Auf der Basis seiner Daten kann die Steuerungseinrichtung 4 den Betrieb der Mahlgradverstelleinrichtung 2 sowohl zeitlich als auch hinsichtlich ihres Umfangs steuern. Die Steuerungseinrichtung 4 kann die Mahlgradverstelleinrichtung 2 insbesondere zur Verstellung in eine Richtung auf einen gröberen Mahlgrad oder in eine Richtung auf einen feineren Mahlgrad hin antreiben lassen, also aktivieren.

Die Mahlgradverstelleinrichtung 2 ist gemäß der DE 10 2019 204 620 A1 ausgebildet. Sie verfügt daher über einen Spindeltrieb, der die Übertragung sehr hoher Kräfte bzw. Drehmomente ermöglicht. Die Mahlgradverstelleinrichtung 2 lässt sich daher sowohl bei Stillstand des Mahlwerks 1 als auch während seines Betriebs aktivieren. Sowohl den Stillstand des Mahlwerks 1 als auch seinen Betrieb kann der Datenaufnehmer 3 detektieren. Sobald er die eine (Stillstand) oder die andere Information (Betrieb) an die Steuerungseinrichtung 4 weiterleitet, kann jene die Mahlgradverstelleinrichtung 2 grundsätzlich in Betrieb setzen. In der Steuerungseinrichtung 4 können weitere Parameter für den Betrieb der Mahlgradverstelleinrichtung 2 hinterlegt sein, beispielsweise eine Anzahl an Umdrehungen, von Betätigungen oder eine Anzahl von abgeschlossenen Mahlvorgängen des Mahlwerks 1, ab der eine Aktivierung der Mahlgradverstelleinrichtung 2 vorgenommen werden soll.

Die erfindungsgemäße Anordnung aus dem Mahlwerk 1, der Mahlgradverstelleinrichtung 2, dem Datenaufnehmer 3 und der Steuerungseinrichtung 4 kann auch eine Entspannung des Mahlwerks 1 herbeiführen. Zum Entspannen bzw. Relaxieren des Mahlwerks 1 fährt die Mahlgradverstelleinrichtung 2 das Mahlwerk 1 auf bzw. eine gewisse Anzahl an Stufen gröber. Dadurch können Druckkräfte abgebaut werden, die anderenfalls auf die Komponenten des Mahlwerks 1 länger einwirken würden. Sind die Mahlwerkskomponenten aus Kunststoff gefertigt, können sie auf Dauer durch Kriechen ihre Maßhaltigkeit verlieren. Das Mahlwerk 1 würde dadurch seine Genauigkeit einbüßen und seine Lebensdauer verkürzen. Ein regelmäßiges Relaxieren dient damit einem nachhaltigen Betrieb des Kaffeevollautomaten.

Die erfindungsgemäße Anordnung sorgt nun für ein regelmäßiges Relaxieren, indem in der Steuerungseinrichtung 4 Parameter hinterlegt sind, wann die Mahlgradverstelleinrichtung 2 zum Zwecke des Entspannens des Mahlwerks 1 aktiviert werden soll. Ein Parameter kann beispielsweise aussagen, dass eine derartige Aktivierung nach jedem zehnten abgeschlossenen Mahlvorgang des Mahlwerks 1 vorzunehmen ist. Daraufhin erfasst der Datenaufnehmer 3 die abgeschlossenen Mahlvorgänge beziehungsweise zählt sie und meldet sie per Leitung 5 an die Steuerungseinrichtung 4. Nach Erreichen des zehnten Mahlvorgangs aktiviert die Steuerungseinrichtung 4 die Mahlgradverstelleinrichtung 2 in der Weise, dass sie den Mahlgrad des Mahlwerks 1 in Richtung auf einen groben Mahlgrad hin verstellt.

Das Entspannen des Mahlwerks 1 erfolgt also vollständig automatisch und ohne Zutun eines Benutzers. Dies erleichtert dem Benutzer den Betrieb des Kaffeevollautomaten, weil er selbst keine derartigen Maßnahmen zur Verbesserung der Lebensdauer des Kaffeevollautomaten ergreifen muss. Zudem erfordert das Entspannen des Mahlwerks 1 keine eigene, separate Vorrichtung, sondern nutzt eine ohnehin regelmäßig vorhandene Mahlgradverstelleinrichtung 2.

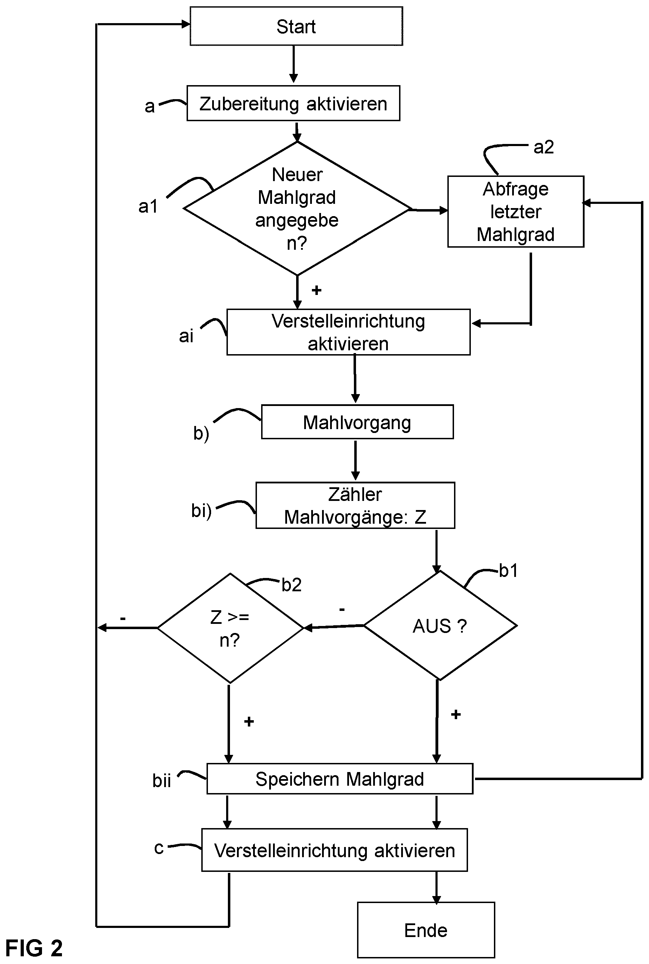

Das erfindungsgemäße Verfahren gemäß Figur 2 beginnt mit einem Start, der im Einschalten eines Heißgetränkegeräts, insbesondere eines Kaffeevollautomaten für den Hausgebrauch, bestehen kann, oder in einem "Aufwecken" des Heißgetränkegeräts aus einem Ruhezustand. Daraufhin wird in einem Schritt a) ein Zubereitungsprogramm des Getränkegerät aktiviert. Die Aktivierung kann die Auswahl eines bestimmten Getränkewunsches umfassen, beispielsweise eines Ristretto oder eines Milchkaffees. Daraufhin sind benutzerseitig regelmäßig Zubereitungsparameter anzugeben, wie beispielsweise eine Getränkemenge, eine Bohnensorte oder die Menge einer Milchzugabe beim Milchkaffee. Gerade im Zusammenhang mit der Auswahl einer Bohnensorte kann es auch zur Angabe eines auf sie anzuwendenden Mahlgrads kommen.

In einem anschließenden Schritt a1) erfolgt eine Abfrage seitens der Steuerungseinrichtung des Heißgetränkegeräts, ob bei der obigen Eingabe der Zubereitungsparameter tatsächlich ein neuer Mahlgrad angegeben wurde.

Trifft dies zu, wird im nachfolgenden Schritt ai) die Verstelleinrichtung entsprechend aktiviert, um den neuen Mahlgrad einzustellen.

Anderenfalls wird der zuletzt eingestellte Mahlgrad des Heißgetränkegeräts aus dem letzten Zubereitungsvorgang abgefragt. Die Steuerungseinrichtung entnimmt ihn einem Speicher, in dem der zuletzt eingestellte Mahlgrad im Laufe eines vorangegangenen Zubereitungsvorgangs abgelegt wurde, wie unten erläutert wird. Anschließend wird die Verstelleinrichtung im Schritt ai) aktiviert, um das Mahlwerk auf den zuletzt eingestellten Mahlgrad einzustellen.

Mit dem nun eingestellten Mahlgrad wird im Schritt b) der Mahlvorgang des aktuellen Zubereitungsvorgangs durchgeführt.

Nach Abschluss des Mahlvorgangs oder spätestens nach Abschluss des aktuellen Zubereitungsvorgangs erfasst in einem anschließenden Schritt b) ein Zähler der Steuerungseinrichtung die Anzahl der bereits erfolgten Mahlvorgänge. Alternativ kann der Zähler ein Betriebsintervall des Mahlwerks, also eine kumulierte Zeitdauer für den Betrieb des Mahlwerks während der durchgeführten Zubereitungsvorgänge seit der letzten Abfrage erfassen. Damit erfasst die Steuereinrichtung eine Betriebsbelastung des Mahlwerks.

Bevor nun der Wert des Zählers in der Steuerungseinrichtung verarbeitet wird, wird im Schritt b1) abgefragt, ob ein Benutzer das Heißgetränkegerät ausschalten möchte. Sollte dies der Fall sein, wird im Schritt bii) der aktuelle Mahlgrad gespeichert und in einem Speicher zur eventuellen Abfrage gemäß Schritt a2) abgelegt.

Anschließend wird in einem Schritt c) die Verstelleinrichtung aktiviert, um sie in eine Richtung auf einen gröberen Mahlgrad hin zu verstellen. Diese erfindungsgemäße Verstellung verursacht nicht der Benutzer. Sie hängt auch nicht mit einem vorangegangenen Zubereitungsvorgang zusammen. Auch ein Verschmutzungsgrad des Mahlwerks ist nicht das auslösende Ereignis für die erfindungsgemäße Verstellung des Mahlwerks. Vielmehr sorgt sie für eine Entlastung der Mahlwerkskomponenten bzw. ein Entspannen des Mahlwerks des ausgeschalteten Heißgetränkegeräts.

Auch ohne Ausschalten des Heißgetränkegeräts kann ein Entspannen des Mahlwerks angebracht sein. Sollte daher in dem obigen Schritt b1) kein Ausschalten des Heißgetränkegeräts angefordert worden sein, so wird in einem daran anschließenden Schritt b2) der Wert des Zählers Z aus dem Schritt bi) mit einem zum Beispiel werkseitig vorgegebenen und maschinenseitig hinterlegten Schwellwert n verglichen. Hat der Wert des Zählers Z den Schwellwert n beispielsweise erreicht oder überschritten, wird anschließend der Schritt bii) ausgeführt, in dem der aktuelle Mahlgrad für eine eventuelle Abfrage im Schritt a2) eines späteren Verfahrensdurchlaufs gespeichert wird. Anschließend wird im nachfolgenden Schritt c) die Verstelleinrichtung aktiviert, um das Mahlwerk in Richtung auf einen gröberen Mahlgrad hin zu verstellen und um das Mahlwerk zu entspannen. Anschließend steht das Heißgetränkegerät entweder für einen Bereitschaftszustand oder für einen nachfolgenden Zubereitungsvorgang zur Verfügung, der mit einem neuen Schritt a) eingeleitet werden kann.

Dieses Vorgehen stellt sicher, dass nach einer bestimmten Betriebszeit und einer damit einhergehenden Belastung des Mahlwerks jedenfalls eine zumindest vorübergehende Entspannung eintritt, vor allem, wenn sich daran eine längere Phase der Inaktivität des Heißgetränkegeräts in einem Bereitschaftszustand anschließen sollte.

Der Wertevergleich zwischen dem Wert des Zählers Z und demjenigen des Schwellwerts n im Schritt b2) ergibt anderenfalls, dass der Schwellenwert n nicht erreicht ist. Dann steht das Heißgetränkegerät ebenfalls und ohne Zwischenschritte entweder für einen Bereitschaftszustand oder für einen nachfolgenden Zubereitungsvorgang zur Verfügung, der mit einem neuen Schritt a) eingeleitet werden kann.

Da es sich bei dem vorhergehenden, detailliert beschriebenen Heißgetränkegerät, dem Verfahren zum Betreiben des Heißgetränkegeräts, der Verwendung der Mahlgradverstelleinrichtung des Heißgetränkegeräts und dem Computerprogrammprodukt um Ausführungsbeispiele handelt, können sie in üblicher Weise vom Fachmann in einem weiten Umfang modifiziert werden, ohne den Bereich der Erfindung zu verlassen. Insbesondere können auch die konkrete Ausgestaltung des Datenaufnehmers 3 und seine Verschaltung mit der Steuerungseinrichtung 4 in anderer Form als in der hier beschriebenen erfolgen. Außerdem schließt die Verwendung der unbestimmten Artikel "ein" bzw. "eine" nicht aus, dass die betreffenden Merkmale auch mehrmals oder mehrfach vorhanden sein können.

## Patentansprüche

1. Heißgetränkezubereitungseinrichtung, insbesondere für Haushaltszwecke, zur Durchführung unterschiedlicher Zubereitungsvorgänge, mit zumindest einem Mahlwerk (1) für Mahlgut, mit einer Vorrichtung (2) zum Verstellen des Mahlgrads des zumindest einen Mahlwerks ("Mahlgradverstelleinrichtung"), mit einer Steuerungseinrichtung (4) zur Steuerung der Zubereitungsvorgänge, **gekennzeichnet durch** eine elektrisch ansteuerbare Ausbildung der Mahlgradverstelleinrichtung (2) und durch eine Ausbildung und Einrichtung der Steuereinheit (4) und der Mahlgradverstelleinrichtung (2) dazu, die Mahlgradverstelleinrichtung (2) jedenfalls auch während eines Mahlvorgangs zu betreiben.

2. Heißgetränkezubereitungseinrichtung nach dem obigen Anspruch, **gekennzeichnet durch** eine Ausbildung und Einrichtung der Steuereinheit (4) und der Mahlgradverstelleinrichtung (2) dazu, die Mahlgradverstelleinrichtung (2) nach einem Mahlvorgang in eine Richtung auf einen gröberen Mahlgrad hin zu verstellen.

3. Heißgetränkezubereitungseinrichtung nach dem obigen Anspruch, **gekennzeichnet durch** eine Speichereinrichtung, die die Stellung der Mahlgradverstelleinrichtung (2) vor der Verstellung in eine Richtung auf einen gröberen Mahlgrad hin erfasst und abrufbar speichert.

4. Verfahren zum Betreiben einer Heißgetränkezubereitungseinrichtung nach einem der obigen Ansprüche, mit den folgenden Schritten:
a) Aktivieren eines Zubereitungsvorgangs,
b) Durchführen eines Mahlvorgangs,
**gekennzeichnet durch** einen Schritt c) zumindest während eines Mahlvorgangs in Schritt b), wonach die Mahlgradverstelleinrichtung aktiviert wird ("erste Aktivierung"), um den Mahlgrad in eine Richtung auf einen gröberen Mahlgrad oder in eine Richtung auf einen feineren Mahlgrad hin zu verstellen.

5. Verfahren nach dem obigen Verfahrensanspruch, **gekennzeichnet durch** die erste Aktivierung der Mahlgradverstelleinrichtung im Schritt c) in eine Richtung auf einen gröberen Mahlgrad hin.

6. Verfahren nach dem obigen Verfahrensanspruch, **gekennzeichnet durch** die erste Aktivierung der Mahlgradverstelleinrichtung im Schritt c) nach jedem Mahlvorgang oder in Abhängigkeit von einem Zeitintervall oder von einer Anzahl von Betätigungen des Mahlwerks oder vor einem Trennen der Heißgetränkezubereitungseinrichtung vom elektrischen Stromnetz.

7. Verfahren nach einem der obigen Verfahrensansprüche, **gekennzeichnet durch** einen Schritt bi) nach dem Schritt b), in dem die Anzahl der Mahlvorgänge und/oder ein Zeitintervall für die Betriebsdauer der Heißgetränkezubereitungseinrichtung erfasst, mit einem vorgegebenen Wert verglichen wird und bei Erreichen oder Überschreiten des vorgegebenen Werts in einem nachfolgenden Schritt bii) der aktuelle Mahlgrad gespeichert wird.

8. Verfahren nach dem obigen Verfahrensanspruch, **gekennzeichnet durch** einen Schritt ai) nach dem Schritt a), in dem die Mahlgradverstellung aktiviert wird ("zweite Aktivierung"), um den Mahlgrad des letzten vorangegangenen Mahlvorgangs eines vorangegangenen Zubereitungsvorgangs oder einen neuen Mahlgrad aus dem Schritt a) einzustellen.

9. Verwendung einer Mahlgradverstelleinrichtung einer Heißgetränkezubereitungseinrichtung, letztere zur Durchführung unterschiedlicher Zubereitungsvorgänge, zum Verstellen eines Mahlwerks der Heißgetränkezubereitungseinrichtung jedenfalls auch während eines Mahlvorgangs des Mahlwerks.

10. Verwendung nach dem obigen Anspruch, **gekennzeichnet durch** ein selbsttätiges Verstellen des Mahlwerks unmittelbar nach einem Mahlvorgang und/oder in eine Richtung auf einen gröberen Mahlgrad hin.

11. Verwendung nach einem der Ansprüche 9 oder 10, mit einer Steuerungseinrichtung zur Steuerung der Zubereitungsvorgänge, **gekennzeichnet durch** eine Verwendung der Steuerungseinrichtung zum selbsttätigen Verstellen der Mahlgradverstelleinrichtung.

12. Computerprogramm[produkt], das direkt in den internen Speicher eines digitalen Computers einer Heißgetränkezubereitungseinrichtung geladen werden kann und Softwarecodeabschnitte umfasst, mit denen die Schritte gemäß den Ansprüchen 4 bis 8 ausgeführt werden, wenn das Produkt auf dem Computer läuft.
